# EUROPÄISCHE PATENTSCHRIFT

(11) **EP 1 117 909 B1**
(45) Veröffentlichungstag und Bekanntmachung des Hinweises auf die Patenterteilung: **21.04.2004**
(21) Anmeldenummer: 99969471.4
(22) Anmeldetag: 09.09.1999
(51) Int. Cl.: F01N 3/20

(54) **VERFAHREN UND VORRICHTUNG ZUR KATALYTISCHEN BESEITIGUNG EINES SCHADSTOFFES AUS DEM ABGAS EINER VERBRENNUNGSANLAGE**
METHOD AND DEVICE FOR CATALYTICALLY REMOVING A POLLUTANT FROM THE EXHAUST GAS OF AN INTERNAL COMBUSTION SYSTEM
PROCEDE ET DISPOSITIF D'ELIMINATION PAR VOIE CATALYTIQUE D'UN POLLUANT CONTENU DANS DES GAZ D'ECHAPPEMENT D'UN MOTEUR A COMBUSTION INTERNE

(30) Priorität: 22.09.1998 DE 19843423
(43) Veröffentlichungstag der Anmeldung: 25.07.2001
(73) Patentinhaber: Argillon GmbH, 96257 Redwitz (DE)
(72) Erfinder: NEUFERT, Ronald, D-96247 Michelau (DE); MATHES, Wieland, D-96247 Michelau (DE); WENZLAWSKI, Klaus, D-90429 Nürnberg (DE); WEISENSEL, Dietmar, D-93161 Sinzing (DE); ZÜRBIG, Jürgen, D-96224 Burgkunstadt (DE); DÖLLING, Winfried, D-96369 Weissenbrunn (DE); TOST, Rainer, D-90427 Nürnberg (DE); LATSCH, Reinhard, D-74889 Sinsheim (DE)
(74) Vertreter: Tergau & Pohl Patentanwälte
(86) Internationale Anmeldenummer: PCT/DE1999/002857
(87) Internationale Veröffentlichungsnummer: WO 2000/017498

(56) Entgegenhaltungen:
- EP-A- 0 498 598
- DE-A- 19 536 571
- DE-C- 19 629 163
- US-A- 5 628 186

## Beschreibung

Die Erfindung betrifft ein Verfahren zur katalytischen Beseitigung eines Schadstoffes aus dem Abgas einer Verbrennungsanlage gemäß dem Oberbegriff des Anspruchs 1. Die Erfindung betrifft des weiteren eine Vorrichtung gemäß dem Oberbegriff des Anspruchs 8 zur Durchführung des angegebenen Verfahrens.

Bei der Verbrennung eines fossilen Brennstoffs oder von Müll in einer Verbrennungsanlage entstehen in nicht unerheblichem Umfang Schadstoffe wie Stickoxide, Kohlenwasserstoffe, Kohlenmonoxid, Schwefeloxide und insbesondere Dioxine und Furane, welche über das Abgas der Verbrennungsanlage in die Umwelt gelangen können. Ein derartige, Schadstoffe emittierende Verbrennungsanlage ist beispielsweise eine Kesselanlage, ein Kohle-, Öl- oder Gas-befeuertes Kraftwerk, eine Gasturbine oder aber auch ein Verbrennungsmotor, insbesondere ein Dieselmotor. Auch eine Müllverbrennungsanlage emittiert die genannten Schadstoffe.

Aufgrund strenger gesetzlicher Vorschriften, welche die Abgabemenge der genannten Schadstoffe limitieren, ist für die genannten Verbrennungsanlagen eine zusätzliche Behandlung der Abgase zur Verminderung der darin enthaltenen Schadstoffe erforderlich. Hierzu sind in der Vergangenheit eine Vielzahl von Katalysatoren entwickelt worden, welche die Schadstoffe zu ungefährlichen Verbindungen umsetzen.

Bei ungeeigneter Abgaszusammensetzung ist es verschiedentlich erforderlich, daß dem Abgas zusätzlich ein Reaktionsmittel beigegeben werden muß, welches an einem geeigneten Katalysator mit dem zu beseitigenden Schadstoff zu unschädlichen Verbindungen reagiert. Beispielsweise muß zum Abbau von Stickoxiden in einem Sauerstoff-enthaltenden Abgas als ein Reaktionsmittel ein geeignetes Reduktionsmittel beigegeben werden, welches auch in Anwesenheit von Sauerstoff die im Abgas enthaltenen Stickoxide zu unschädlichem Stickstoff reduziert. Diese Reaktion läßt sich mit einem sogenannten DeNOx-Katalysator, welcher auf Basis von Titandioxid mit Beimengungen an Vanadinpentoxid, Molybdäntrioxid und/oder Wolframtrioxid aufgebaut ist, katalysieren. Am DeNOx-Katalysator werden die Stickoxide gemäß dem SCR-Verfahren der selektiven katalytischen Reduktion mit dem Reduktionsmittel, meist Ammoniak, zu Stickstoff und Wasser umgesetzt.

Um einen vollständigen Abbau des Schadstoffes im Abgas zu erzielen, muß das separat zugegebene Reaktionsmittel in einer bezüglich der Konzentration des Schadstoffes stöchiometrischen Menge zugegeben werden. Die Zugabe des Reaktionsmittels hat also bedarfsabhängig, d.h. abhängig von der pro Zeiteinheit von der Verbrennungsanlage emittierten Schadstoffmenge. zu erfolgen.

Insbesondere bei einer mit häufigen Lastwechseln betriebenen Verbrennungsanlage, wie beispielsweise einem zur Traktion eines Fahrzeuges eingesetzten Dieselmotor, gestaltet sich die Ermittlung der pro Zeiteinheit einzubringenden Menge an Reaktionsmittel schwierig. Da entsprechend der häufigen Lastwechsel die Emission an Schadstoffen innerhalb kurzer Zeitintervalle beträchtlich variiert, wird es notwendig, daß auch die zudosierte Menge an Reaktionsmittel sehr schnell variiert und genau eingestellt wird.

Für eine bedarfsabhängige, exakte Zudosierung des Reaktionsmittels wird eine genaue Kenntnis der von der Verbrennungsanlage tatsächlich emittierten Schadstoffmenge erforderlich. Bei einer stationär betriebenen Verbrennungsanlage kann die Kenntnis der tatsächlich emittierten Schadstoffmenge durch eine Messung der Konzentration des Schadstoffes im Abgas erlangt werden. Hierzu wird ein schadstoffempfindlicher Sensor im Abgas plaziert, und die Meßwerte des Sensors werden zur Steuerung der Einbringmenge des Reaktionsmittels verwendet.

Bei schneller Variation der emittierten Schadstoffmenge ist eine direkte Messung der Konzentration des Schadstoffes im Abgas jedoch nicht mehr möglich. Schadstoffsensoren, welche schnell genug für eine Echtzeitmessung wären, sind bislang nicht bekannt. Sensoren zur Erfassung von Schadstoffkonzentrationen in gasförmigen Medien sind meist als Leitfähigkeits- oder Kapazitäts-Sensoren, d. h. als Sensoren auf Basis eines Materials, dessen Leitfähigkeit bzw. dessen Kapazität empfindlich auf den Schadstoff reagiert, ausgebildet. Da der Schadstoff in das Material eindringen muß, haben derartige Sensoren eine verhältnismäßig lange Ansprechzeit. Dies macht eine direkte Messung der Konzentration des Schadstoffes bei sehr schneller Variation unmöglich.

Selbst wenn es Sensoren mit einer hinreichend schnellen Ansprechzeit geben sollte, führt eine meßwertorientierte Steuerung der Einbringmenge des Reaktionsmittel bei einer mit häufigen und schnellen Lastwechseln betriebenen Verbrennungsanlage nicht zu einem maximal möglichen Umsatz des Schadstoffes. Grund hierfür ist, daß zu dem katalytischen Abbau des Schadstoffes ein Adsorptionsvorgang des Reaktionsmittels an dem Katalysator notwendig ist. Ein solcher Adsorptionsvorgang läuft kinetisch relativ langsam ab. Eine auf die aktuell gemessene Konzentration des Schadstoffes zugeschnittene Menge an Reaktionsmittel führt bei schnellen Lastwechseln daher nicht zu dem maximal möglichen Umsatz.

Zur Lösung des Problems ist es aus der DE 43 15 278 A1 bekannt, aus betriebsrelevanten Parametern der Verbrennungsanlage die bei dem jeweiligen Betriebszustand emittierte Schadstoffmenge oder einen Wert für die aktuelle Konzentration des Schadstoffes vorauszuberechnen. Entsprechend dem vorausberechneten Wert wird die Einbringmenge des Reaktionsmittels gesteuert. Als betriebsrelevante Parameter werden für einen Dieselmotor Luftmassenstrom, Regelstangenweg, Ladedruck, Drehmoment und Drehzahl angegeben. Die Vorausberechnung der aktuellen Konzentration des Schadstoffes im Abgas geschieht dabei anhand eines in einer Kontrolleinheit implementierten Kennfeldes, in welchem jeder einem definierten Betriebszustand der Verbrennungsanlage entsprechenden Parameterschar ein Konzentrationswert für den Schadstoff zugeordnet ist. Die Ermittlung eines derartigen Kennfeldes geschieht beispielsweise durch Testläufe auf einem Motorprüfstand.

Nachteiligerweise muß jedoch bei einer derartigen kennfeldorientierten Steuerung die tatsächlich eingebrachte Menge an Reaktionsmittel kleiner gewählt werden, als die entsprechend der vorausberechneten Konzentration stöchiometrisch einzubringenden Menge. Es muß nämlich ein gewisser Sicherheitsabstand eingehalten werden, damit ein Schlupf des Reaktionsmittels, welches beispielsweise im Falle von Ammoniak toxisch wirkt, sicher vermieden ist. Der Grund für diese Vorgehensweise liegt zum einen in einer unvermeidlichen Serienstreuung der Verbrennungsanlagen und zum anderen in einer Alterung der Verbrennungsanlage oder ihrer Komponenten während des Betriebs. Beides führt dazu, daß das starr implementierte Kennfeld die tatsächlichen Beziehungen zwischen dem jeweiligen Betriebszustand der Verbrennungsanlage und der emittierten Schadstoffmenge nicht mehr korrekt wiedergibt. Es wird also durch das Kennfeld eine Schadstoffmenge vorausberechnet, welche der tatsächlich emittierten Schadstoffmenge nicht entspricht. Dies führt zu einer falschen Dosierung des Reaktionsmittels.

Mit einer auf einem starren Kennfeld beruhenden Steuerung der Einbringmenge des Reaktionsmenge läßt sich demnach kein maximaler Umsatz des Schadstoffes erzielen, wenn gleichzeitig ein Schlupf des Reaktionsmittels in die Umwelt sicher vermieden werden soll.

Als Lösung für dieses Problem ist aus der DE 195 36 571 A1 bekannt, das vorgegebene Kennfeld während des Betriebs der Verbrennungsanlage zu überprüfen und an den aktuellen Zustand der Verbrennungsanlage anzupassen. Zur Überprüfung wird die aktuelle Schadstoffkonzentration mittels Sensoren erfaßt und mit dem vorausberechneten Wert verglichen. Das Kennfeld wird dann mittels mathematischer Methoden an den tatsächlich emittierten Wert angepaßt.

Nachteiligerweise ist jedoch die für die Korrektur des Kennfeldes unabdingbare Messung der Konzentration des Schadstoffes aufgrund der unzulänglichen Sensoren in der Praxis mit hohen Meßfehlern verbunden. Das angegebene Konzept eignet sich daher nur eingeschränkt für eine Verbrennungsanlage mit einer sehr schnellen Variation der Abgasmenge.

Aufgabe der Erfindung ist es, ein Verfahren sowie eine zugehörige Vorrichtung zur katalytischen Entfernung eines Schadstoffes mittels eine Reaktionsmittels aus dem Abgas einer Verbrennungsanlage, insbesondere eines Dieselmotors, anzugeben, wobei die Einbringmenge des Reaktionsmittels kennfeldorientiert gesteuert wird, wodurch ein hoher Umsatz des Schadstoffes auch bei einer mit häufigen und schnellen Lastwechseln betriebenen Verbrennungsanlage erzielt wird. Auch soll bei Alterung oder Serienstreuung der Vebrennungsanlage der hohe Umsatz gleichermaßen gewährleistet sein.

Bezüglich des Verfahrens wird die Aufgabe gelöst durch ein Verfahren zur katalytischen Entfernung eines Schadstoffes aus dem Abgas einer Verbrennungsanlage, insbesondere eines Dieselmotors, wobei mittels eines vorgegebenen Kennfeldes aus betriebsrelevanten Parametern der Verbrennungsanlage die Konzentration des Schadstoffes im Abgas berechnet wird, und wobei in Abhängigkeit von der berechneten Konzentration des Schadstoffes pro Zeiteinheit eine vorgegebene Menge eines Reaktionsmittels in das Abgas eingebracht und zusammen mit dem Schadstoff an einem Katalysator umgesetzt wird, wobei erfindungsgemäß Betriebszustände der Verbrennungsanlage mit im wesentlichen konstanter Schadstoffemission ermittelt werden, und wobei während eines Betriebszustands der Verbrennungsanlage mit im wesentlichen konstanter Schadstoffemission mittels eines Sensors die Konzentration des Schadstoffes im Abgas ermittelt und zu einer Korrektur des Kennfeldes herangezogen wird.

Die Erfindung geht dabei von der Überlegung aus, daß bislang bekannte, aufgrund ihrer Ansprechzeit unzulängliche Sensoren zur Erfassung der Konzentration des Schadstoffes bei einer zeitlich konstanten Emission des Schadstoffes durchaus den tatsächlichen Wert der Konzentration erfassen. Eine Bestimmung der Konzentration des Schadstoffes im Abgas einer Verbrennungsanlage ist demnach bei einem Betriebszustand mit einer im wesentlichen konstanten Schadstoffemission ohne großen Meßfehler möglich. Auch herrscht bezüglich des Adsorptionsvorganges des Reaktionsmittels auf dem Katalysator während eines solchen Betriebszustandes ein dynamisches Gleichgewicht. Derartige Vorgänge beeinflussen dann die Messung nicht.

Weiter geht die Erfindung von der Überlegung aus, daß eine konstante Schadstoffemission bei einer Vielzahl von sich durch die übrigen betriebsrelevanten Parameter unterscheidenden Betriebszuständen der Verbrennungsanlage auftritt. So zeichnet sich beispielsweise ein zur Traktion eines LKW eingesetzter Dieselmotor während einer Leerlaufphase ebenso durch eine konstante Schadstoffemission aus wie bei einer konstanten Geschwindigkeit des LKW bei hoher Last. Die beiden genannten Betriebszustände unterscheiden sich jedoch insbesondere hinsichtlich Gaspedalstellung, Drehmoment und Kraftstoffverbrauch.

Die Erfindung geht ferner von der Überlegung aus, daß mit der Zeit der größte Teil der durch das Kennfeld abgedeckten Parameterscharen von Betriebszuständen mit konstanter Schadstoffemission überstrichen wird. Dies ermöglicht eine einfache und sichere, allmähliche Korrektur des gesamten Kennfeldes und damit eine Anpassung des Kennfeldes an den aktuellen Zustand der Verbrennungsanlage.

In vorteilhafter Weise werden die Betriebszustände mit der im wesentlichen konstanten Schadstoffemission mittels des Sensors ermittelt. Hierzu wird während des Betriebs der von dem Sensor gelieferte Meßwert kontinuierlich verfolgt. Bleibt der Meßwert für einen vorgebbaren Zeitraum konstant, so wird ein solcher Betriebszustand als ein Betriebszustand mit konstanter Schadstoffemission erkannt. Anhand der übrigen betriebsrelevanten Parameter, welche beispielsweise über eine Schnittstelle der Steuereinheit der Verbrennungsanlage zur Verfügung stehen, wird mittels des Kennfeldes der dem definierten Betriebszustand zugeordnete, angenommene Wert der Konzentration des Schadstoffes berechnet. Der berechnete Wert wird dann zu einer Korrektur des Kennfeldes herangezogen.

Vorzugsweise wird ein Betriebszustand der Verbrennungsanlage dann als ein Betriebszustand mit im wesentlichen konstanter Schadstoffemission ermittelt, wenn der Sensor über einen Zeitraum, welcher länger als seine Ansprechzeit ist, einen konstanten Meßwert mißt. Je kürzer der zur Einschätzung der konstanten Emission vorgebbare Zeitraum ist, um so größer werden die Meßfehler für die ermittelte Konzentration des Schadstoffes und damit für die Korrektur des Kennfeldes sein. Allerdings wird die Korrektur des gesamten Kennfeldes um so schneller erfolgen.

In vorteilhafter Ausgestaltung der Erfindung wird zur Korrektur des Kennfeldes der im Kennfeld vorgegebene Wert für die Konzentration des Schadstoffes mit dem mittels des Sensors ermittelten Wert für die Konzentration des Schadstoffes verglichen und der vorgegebene Wert bei einer Abweichung, welche außerhalb einer vorgegebenen Toleranzbreite liegt, durch den ermittelten Wert ersetzt. Bei einer Verbrennungsanlage mit häufigen Lastwechseln oder häufig unterschiedlichen Betriebszuständen führt eine punktuelle Korrektur rasch zu einer Anpassung des gesamten Kennfeldes an den aktuellen Zustand der Verbrennungsanlage.

Zweckmäßigerweise wird die Konzentration des Schadstoffes im Abgas direkt mittels eines schadstoffempfindlichen Sensors ermittelt. Der von einem solchen Sensor gelieferte Meßwert ist proportional zur Konzentration des Schadstoffes und kann dann direkt in die Konzentration umgerechnet werden.

Alternativ hierzu wird die Konzentration des Schadstoffes dadurch ermittelt, daß mittels eines für eine weitere Komponente des Abgases empfindlichen Sensors die Konzentration der weiteren Komponente gemessen, und daß aus der Konzentration der weiteren Komponente die Konzentration des Schadstoffes ermittelt wird. Eine solche Vorgehensweise bietet sich an, wenn für den zu messenden Schadstoff keine geeigneten Sensoren verfügbar sind. Zur Umrechnung muß davon ausgegangen werden, daß die Zusammensetzung des von der Verbrennungsanlage emittierten Abgases einer gewissen Gesetzmäßigkeit unterliegt. Steigt oder fällt die Konzentration einer Komponente des Abgases, so kann daraus auf ein Steigen oder ein Fallen der anderen Komponente zurückgeschlossen werden. Im Abgas eines Dieselmotors kann beispielsweise aus der Konzentration des Kohlenmonoxids und/oder der Kohlenwasserstoffe auf die Konzentration der Stickoxide geschlossen werden.

In einer weiteren vorteilhaften Ausgestaltung der Erfindung wird als Reaktionsmittel dem Abgas Ammoniak oder eine Ammoniak freisetzende Substanz, insbesondere Harnstoff, beigegeben und als Schadstoff Stickoxide gemäß dem SCR-Verfahren der selektiven katalytischen Reduktion an einem DeNOx-Katalysator umgesetzt.

Hierbei ist es vorteilhaft, wenn die Konzentration von Stickoxiden im Abgas ermittelt wird, indem mittels eines Sensors im Abgas die Konzentration von Kohlenwasserstoffen oder Kohlenmonoxid gemessen und aus der Konzentration an Kohlenwasserstoffen oder Kohlenmonoxid auf die Konzentration der Stickoxide zurückgeschlossen wird.

Bezüglich der Vorrichtung wird die genannte Aufgabe gelöst durch eine Vorrichtung zur katalytischen Entfernung eines Schadstoffes aus dem Abgas einer Verbrennungsanlage, insbesondere eines Dieselmotors, mit einem Abgaskanal, mit einer Einbringvorrichtung zum Einbringen eines Reaktionsmittels in das Abgas, mit einem vom Abgas durchströmbaren Katalysator zur Umsetzung des Reaktionsmittels mit dem Schadstoff und mit einer mit der Verbrennungsanlage und der Einbringvorrichtung verbundenen Kontrolleinheit, wobei der Kontrolleinheit betriebsrelevante Parameter der Verbrennungsanlage verfügbar sind, und wobei die Kontrolleinheit für die Berechnung der Konzentration des Schadstoffes aus den betriebsrelevanten Parameter anhand des vorgegebenen Kennfeldes und für eine Steuerung des Reaktionsmitteldurchsatzes in der Einbringvorrichtung in Abhängigkeit von der berechneten Konzentration ausgelegt ist, wobei erfindungsgemäß im Abgaskanal ein mit der Kontrolleinheit verbundener Sensor angeordnet und die Kontrolleinheit zusätzlich zur Ermittlung der Konzentration des Schadstoffes im Abgas mittels der über den Sensor verfügbaren Werte, zur Erkennung eines Betriebszustandes der Verbrennungsanlage mit im wesentlichen konstanter Schadstoffemission und zur Korrektur des Kennfeldes anhand des während eines solchen Betriebszustands mittels des Sensors ermittelten Wertes der Konzentration des Schadstoffes ausgelegt ist.

Die Einbringvorrichtung kann in an sich bekannter Art und Weise in Form eines Einspritzventil, einer Einspritzdüse oder bei einer großen Verbrennungsanlage in Form eines über den Querschnitt des Abgaskanals verteilten Eindüsegitters ausgebildet sein. Die Steuerung des Reaktionsmitteldurchsatzes kann dabei entweder durch direkte Steuerung der Einspritzdüse oder des Einspritzventils oder über ein in der Zuführleitung für das Reaktionsmittel angeordnetes steuerbares Ventil geschehen.

Zur Erfassung der betriebsrelevanten Daten der Verbrennungsanlage sind der Kontrolleinheit in der Verbrennungsanlage geeignete Sensorelemente zugeordnet. Über entsprechende Datenleitungen sind die Meßwerte der Sensoren der Kontrolleinheit verfügbar. Die Erfassung und Übermittlung der betriebsrelevanten Parameter gestaltet sich insbesondere bei einem Verbrennungsmotor mit elektronischem Motormanagement besonders einfach. Zum einen weist ein solcher Motor die notwendigen Sensoren zur Erfassung der betriebsrelevanten Parameter auf. Zum anderen verfügt ein solches Motormanagement von sich aus über eine elektronische Schnittstelle, über welche die betriebsrelevanten Parameter, die das Motormanagement überwacht, verfügbar sind. Über eine derartige Schnittstelle können in einfacher Art und Weise Parameter des Verbrennungsmotors, wie beispielsweise Verbrennungstemperatur, Brennstoffverbrauch, Drehmoment, Drehzahl, aber auch Einspritzzeitpunkt und dergleichen entnommen werden.

Üblicherweise ist der Sensor, in Strömungsrichtung des Abgases betrachtet, vor dem Katalysator angeordnet. Auf diese Weise kann die von der Verbrennungsanlage emittierte Schadstoffemission direkt gemessen werden. Es ist aber auch vorstellbar, den Sensor nach dem Katalysator anzuordnen. Auf diese Weise kann dann gleichzeitig die Funktion des Katalysators überprüft werden. Allerdings gestaltet sich die Umrechnung der mittels des Sensors gemessenen Werte in die Konzentration des emittierten Schadstoffes relativ schwierig.

Vorteilhafterweise ist die Kontrolleinheit zu einem Vergleich des im Kennfeld vorgegebenen Wertes der Konzentration des Schadstoffes mit dem mittels des Sensors während des Betriebszustands mit im wesentlichen konstanter Schadstoffemission ermittelten Wert und zur Korrektur des Kennfeldes durch Ersatz des vorgegebenen Wertes in dem Kennfeld mit dem ermittelten Wert bei einer Abweichung, welche außerhalb einer vorgegebenen Toleranzbreite liegt, ausgelegt. Auf diese Weise wird einfach und effektiv allmählich das gesamte Kennfeld dem aktuellen Zustand der Verbrennungsanlage angepaßt.

Vorzugsweise ist der Sensor ein schadstoffempfindlicher Sensor. Die Kontrolleinheit kann dann aus den erfaßten Meßwerten direkt auf die aktuelle Konzentration des Schadstoffes im Abgas zurückrechnen.

In einer anderen vorteilhaften Ausgestaltung ist der Sensor ein für eine weitere Abgaskomponente empfindlicher Sensor. Diese Alternative bietet sich bei Ermangelung eines für den Schadstoff geeigneten Sensors an. Die Kontrolleinheit kann dann über einen entsprechend vorgegebenen Zusammenhang auf die Konzentration des Schadstoff umrechnen.

In einer weiteren vorteilhaften Ausgestaltung der Erfindung ist der Katalysator als ein DeNOx-Katalysator in Waben- oder Plattenform zur Entfernung von Stickoxiden mittels eines Reduktionsmittels ausgebildet. Hierzu umfaßt der Katalysator die Materialien Titandioxid zu 70 bis 95 Gew.-%, Wolframtrioxid und/oder Molybdäntrioxid zu 5 bis 20 Gew.-% und Vanadinpentoxid zu weniger als 5 Gew.-%. Ein solcher Katalysator ist besonders zum Abbau von Stickoxiden nach den SCR-Verfahren geeignet.

Bei der Ausgestaltung der Erfindung als eine Vorrichtung zum Entfernen von Stickstoff ist es, insbesondere in Ermangelung eines schnellen und empfindlichen Stickstoff-Sensors, von Vorteil, einen für eine weitere Abgaskomponente empfindlichen Sensor zu verwenden. Hier empfiehlt es sich, einen Kohlenwasserstoff- oder einen Kohlenmonoxid-Sensor zu verwenden.

Ein Ausführungsbeispiel der Erfindung wird anhand einer Figur näher erläutert.

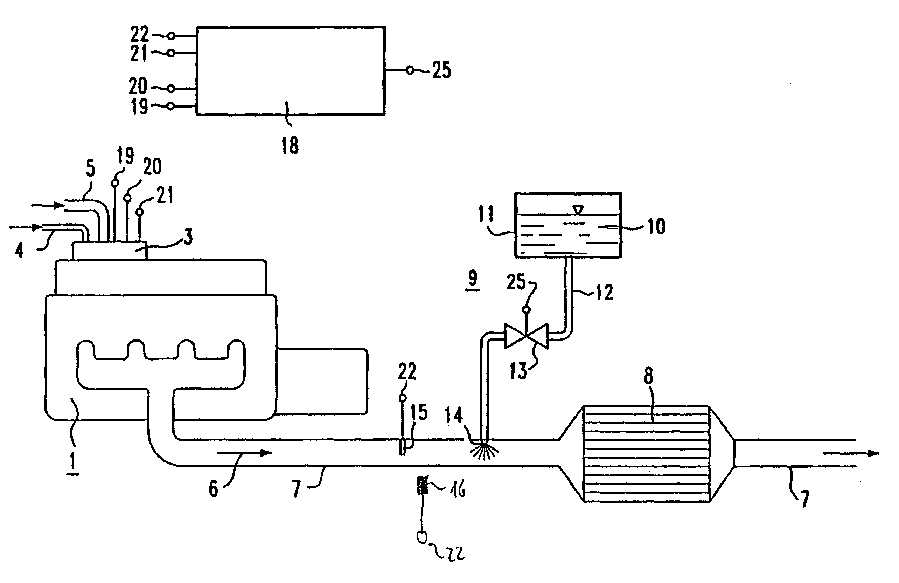

Dabei zeigt die Figur einen Dieselmotor mit einer daran angeschlossenen Vorrichtung zur katalytischen Entfernung der Stickoxide aus dem Abgas.

In der Figur ist als eine Verbrennungsanlage 1 ein Dieselmotor gezeigt, welcher mit einer Vorrichtung zur katalytischen Entfernung der Stickoxide ausgestattet ist. Der Dieselmotor weist eine Schnittstelle 3 auf, an welcher auf elektronischem Wege die aktuellen Werte betriebsrelevanter Parameter abgegriffen werden können. Als betriebsrelevante Parameter sind insbesondere Drehzahl, Drehmoment, Betriebstemperatur, Kraftstoffverbrauch und Einspritzzeitpunkt verfügbar. Über eine Kraftstoff-Zuführleitung 4 und einen Luftansaugstutzen 5 wird dem Dieselmotor ein Kraftstoff/Luft-Gemisch zur Verbrennung zur Verfügung gestellt. Das Abgas 6 des Dieselmotors wird über einen Krümmer in einen Abgaskanal 7 geleitet und über einen Katalysator nach außen geführt. Der Katalysator 8 ist als sogenannter DeNOx-Katalysator ausgebildet, welcher nach dem bekannten SCR-Verfahren Stickoxide mit Hilfe des Reaktionsmittels Ammoniak zu molekularem Stickstoff und Wasser zersetzt. Die benötigte Menge an Ammoniak wird hierzu im Abgas 6 durch Hydrolyse und Pyrolyse von zudosiertem Harnstoff gewonnen.

Für die Dosierung des Harnstoffs ist eine Einbringvorrichtung 9 vorgesehen, welche für das Reaktionsmittel 10 (Harnstoff) einen Vorratsbehälter 11, eine Zuführleitung 12, ein steuerbares Dosierventil 13 und eine Einspritzdüse 14 umfaßt.

Der Katalysator 8 ist als ein vom Abgas durchströmbarer Wabenkörper mit einer Anzahl von parallelen Strömungskanälen ausgebildet. Der Wabenkörper ist als ein Vollextrudat aus einer keramischen Masse mit 80 Gew.-% Titandioxid, 8 Gew.-% Wolframtrioxid, weniger als 2 Gew.-% Vanadiumpentoxid und einem Rest aus anorganischen Stütz- und Filmbilde-Mitteln ausgebildet. Die Auslegung des Katalysators 8 richtet sich nach dem Abgasaufkommen sowie dem Abgasdruck des Dieselmotors.

Zusätzlich ist zwischen der Verbrennungsanlage 1 und dem Katalysator 8 in dem Abgaskanal 7 ein Sensor zur Erfassung der Stickoxidkonzentration oder Stickoxidsensor (15) im Abgas 6 angeordnet. Der Stickoxidsensor (15) kann beispielsweise als ein Kapazitäts- oder Leitfähigkeitssensor ausgebildet sein.

Zur Steuerung des Reaktionsmitteldurchsatzes in der Einbringvorrichtung 9 ist eine Kontrolleinheit 18 vorgesehen. Über die Ausgänge 19, 20 und 21 der Schnittstelle 3 des Dieselmotors stehen der Kontrolleinheit 18 die aktuellen Werte für Drehzahl, Drehmoment, Betriebstemperatur, Kraftstoffverbrauch und Einspritzzeitpunkt als betriebsrelevante Parameter zur Verfügung. Ferner kann über den Ausgang 22 des Stickoxidsensors 15 auf ein der Stickoxidkonzentration des Abgases proportionalen Wert zurückgegriffen werden.

Die Kontrolleinheit 18 berechnet mittels eines, durch an einem Motorprüfstand für den jeweiligen Dieselmotor-Typ festgelegten Kennfeldes, ausgehend von den aktuellen Parameterwerten die für einen Zeitabschnitt zu erwartende Konzentration der Stickoxide im emittierten Abgas 6 des Dieselmotors. Das Kennfeld ist in der Kontrolleinheit 18 in Form von abgespeicherten Werten implementiert. Entsprechend der vorausberechneten Konzentration wird pro Zeiteinheit eine zugehörige Menge an Reaktionsmittel in das Abgas 6 dosiert.

Die Kontrolleinheit 18 überprüft zusätzlich kontinuierlich die von dem Stickoxidsensor 15 gelieferten Werte. Ändern sich innerhalb eines vorgegebenen Zeitraumes, welcher in der Regel etwas länger als die Ansprechzeit des Sensors gewählt wird, die Werte nicht, so interpretiert die Kontrolleinheit 18 den entsprechenden Betriebszustand des Dieselmotors als einen Betriebszustand mit im wesentlichen konstanter Schadstoffemission.

Der mittels des Stickoxidsensors 15 für einen derartigen Betriebszustand ermittelte Wert für die Konzentration der Stickoxide wird dem für den Betriebszustand des Dieselmotors mittels des Kennfeldes vorausberechneten Wert verglichen. Hierbei werden die im letzten Arbeitszyklus der Kontrolleinheit erfaßten betriebsrelevanten Parameter herangezogen. Liegt die Differenz zwischen dem vorausberechneten Wert und dem über den Stickoxidsensor 15 erfaßten Wert außerhalb einer vorgegebenen Toleranz, so wird in dem Kennfeld der den vorliegenden Parameterwerten zugeordnete Wert für die Konzentration der Stickoxide im emittierten Abgas 6 durch den erfaßten, d.h. gemessenen Wert ersetzt. Mit der Zeit führt eine solche Vorgehensweise dazu, daß das gesamte implementierte Kennfeld an den aktuellen Zustand des Dieselmotors angepaßt ist.

Auf diese Weise werden Alterungserscheinungen oder Toleranzen der Motoren innerhalb eines Typs in einfacher Art und Weise berücksichtigt. Es kann letztlich der Sicherheitsabstand zwischen der zudosierten Menge an Reaktionsmittel und der für einen maximalen Umsatz der Stickoxide nötigen Menge gegenüber dem Stand der Technik weiter verringert werden. Durch die Anpassung des Kennfeldes kann daher ein hoher Umsatz der Stickoxide bei einem niedrigen Risiko für einen Ammoniak-Schlupf erzielt werden.

Alternativ kann als ein Sensor zur Erfassung der Konzentration der Stickoxide für ein Abgas eines Dieselmotors auch ein Kohlenwasserstoff- oder ein Kohlenmonoxid-Sensor (16) eingesetzt werden. Aufgrund der Verbrennungsbedingungen im Dieselmotor kann aus der Konzentration von Kohlenwasserstoffen oder von Kohlenmonoxid im Abgas eines Dieselmotors auf die Konzentration der Stickoxide zurückgeschlossen werden.

## Patentansprüche

1. Verfahren zur katalytischen Entfernung eines Schadstoffes aus dem Abgas (6) einer Verbrennungsanlage (1), insbesondere eines Dieselmotors, wobei mittels eines vorgegebenen Kennfeldes aus betriebsrelevanten Parametern der Verbrennungsanlage (1) die Konzentration des Schadstoffes im Abgas (6) berechnet wird, wobei in Abhängigkeit von der berechneten Konzentration des Schadstoffes pro Zeiteinheit eine vorgegebene Menge eines Reaktionsmittels (10) in das Abgas (6) eingebracht und zusammen mit dem Schadstoff an einem Katalysator (8) umgesetzt wird, und wobei das Kennfeld unter Heranziehung eines der tatsächlichen Konzentration des Schadstoffes entsprechenden Meßwerts korrigiert wird,
**dadurch gekennzeichnet, daß**
Betriebszustände der Verbrennungsanlage (1) mit konstanter Schadstoffemission ermittelt werden, indem
a) während des Betriebs der von einem Sensor (15, 16) gelieferte Meßwert der tatsächlichen Schadstoffkonzentration kontinuierlich verfolgt wird,
b) ein Betriebszustand der Verbrennungsanlage (1) als ein Betriebszustand mit konstanter Schadstoffemission erkannt wird, sofern der Meßwert über einen vorgebbaren Zeitraum konstant bleibt,
und daß nur die während eines Betriebszustands der Verbrennungsanlage (1) mit konstanter Schadstoffemission ermittelte Konzentration des Schadstoffs im Abgas (6) zur Korrektur des Kennfeldes herangezogen wird.

2. Verfahren nach Anspruch 1, **dadurch gekennzeichnet, daß** ein Betriebszustand der Verbrennungsanlage (1) dann als ein Betriebszustand mit im wesentlichen konstanter Schadstoffemission ermittelt wird, wenn der Sensor über einen Zeitraum, welcher länger als seine Ansprechzeit ist, einen konstanten Wert mißt.

3. Verfahren nach einem der Ansprüche 1 bis 2, **dadurch gekennzeichnet, daß** zur Korrektur des Kennfeldes der im Kennfeld vorgegebene Wert für die Konzentration des Schadstoffes mit dem mittels des Sensors ermittelten Wert für die Konzentration des Schadstoffes verglichen wird, und daß bei einer Abweichung, welche außerhalb einer vorgegebenen Toleranzbreite liegt, der vorgegebene Wert durch den ermittelten Wert ersetzt wird.

4. Verfahren nach einem der Ansprüche 1 bis 3, **dadurch gekennzeichnet, daß** die Konzentration des Schadstoffes im Abgas (6) direkt mittels eines schadstoffempfindlichen Sensors (15) ermittelt wird.

5. Verfahren nach einem der Ansprüche 1 bis 4, **dadurch gekennzeichnet, daß** die Konzentration des Schadstoffes dadurch ermittelt wird, daß mittels eines für eine weitere Komponente des Abgases (6) empfindlichen Sensors (16) die Konzentration der weiteren Komponente gemessen, und daß aus der Konzentration der weiteren Komponente die Konzentration des Schadstoffes ermittelt wird.

6. Verfahren nach einem der Ansprüche 1 bis 5, **dadurch gekennzeichnet, daß** als Reaktionsmittel (10) dem Abgas (6) Ammoniak oder eine Ammoniak freisetzende Substanz, insbesondere Harnstoff, beigegeben wird, und daß als Schadstoff Stickoxide gemäß dem Verfahren der selektiven katalytischen Reduktion an einem DeNOx-Katalysator umgesetzt werden.

7. Verfahren nach Anspruch 6, **dadurch gekennzeichnet, daß** die Konzentration von Stickoxiden im Abgas (6) ermittelt wird, indem mittels eines Sensors (16) im Abgas die Konzentration von Kohlenwasserstoffen oder Kohlenmonoxid gemessen und aus der Konzentration an Kohlenwasserstoffen oder Kohlenmonoxid auf die Konzentration der Stickoxide zurückgeschlossen wird.

8. Vorrichtung zur katalytischen Entfernung eines Schadstoffes aus dem Abgas (6) einer Verbrennungsanlage (1), insbesondere eines Dieselmotors, mit einem Abgaskanal (7), mit einer Einbringvorrichtung (9) zum Einbringen eines Reaktionsmittels (10) in das Abgas (6), mit einem vom Abgas (6) durchströmbaren Katalysator (8) zur Umsetzung des Reaktionsmittels (10) mit dem Schadstoff und mit einer mit der Verbrennungsanlage (1) und der Einbringvorrichtung (9) verbundenen Kontrolleinheit (18), wobei der Kontrolleinheit (18) betriebsrelevante Parameter der Verbrennungsanlage (1) sowie ein von einem im Abgaskanal (7) angeordneten Sensor (15,16) ermittelter Meßwert der tatsächlichen Konzentration des Schadstoffes verfügbar sind, und wobei die Kontrolleinheit (18) für die Berechnung der Konzentration des Schadstoffes aus den betriebsrelevanten Parametern anhand des vorgegebenen Kennfeldes, für eine Steuerung des Reaktionsmitteldurchsatzes in der Einbringvorrichtung (9) in Abhängigkeit von der berechneten Konzentration und für eine Korrektur des Kennfeldes anhand des der tatsächlichen Konzentration des Schadstoffes entsprechenden Meßwerts ausgelegt ist,
**dadurch gekennzeichnet, daß** die Kontrolleinheit (18) derart ausgebildet ist, daß sie Betriebszustände der Verbrennungsanlage (1) mit konstanter Schadstoffemission ermittelt, indem sie
a) während des Betriebs den von dem Sensor (15, 16) gelieferten Meßwert kontinuierlich verfolgt,
b) einen Betriebszustand der Verbrennungsanlage (1) als einen Betriebszustand mit konstanter Schadstoffemission erkennt, sofern der Meßwert über einen vorgebbaren Zeitraum konstant bleibt,
und daß sie nur die während eines Betriebszustands der Verbrennungsanlage (1) mit konstanter Schadstoffemission ermittelte Konzentration des Schadstoffs im Abgas (6) zur Korrektur des Kennfeldes heranzieht.

9. Vorrichtung nach Anspruch 8, **dadurch gekennzeichnet, daß** die Kontrolleinheit (18) zu einem Vergleich des im Kennfeld vorgegebenen Wertes der Konzentration des Schadstoffes mit dem mittels des Sensors während des Betriebszustands mit im wesentlichen konstanter Schadstoffemission ermittelten Wert und zur Korrektur des Kennfeldes durch Ersatz des vorgegebenen Wertes in dem Kennfeld mit dem ermittelten Wert bei einer Abweichung, welche außerhalb einer vorgegebenen Toleranzbreite liegt, ausgelegt ist.

10. Vorrichtung nach Anspruch 8 oder 9, **dadurch gekennzeichnet, daß** der Sensor ein schadstoffempfindlicher Sensor (15) ist.

11. Vorrichtung nach Anspruch 8 oder 9, **dadurch gekennzeichnet, daß** der Sensor ein für eine weitere Abgaskomponente empfindlicher Sensor (16) ist.

12. Vorrichtung nach einem der Ansprüche 8 bis 11, **dadurch gekennzeichnet, daß** der Katalysator (8) als ein DeNOx-Katalysator in Waben- oder Plattenform zur Entfernung von Stickoxiden mittels eines Reduktionsmittels ausgebildet ist und die Materialien Titandioxid zu 70 bis 95 Gew.-%, Wolframtrioxid und/oder Molybdäntrioxid zu 5 bis 20 Gew.-% und Vanadinpentoxid zu weniger als 5 Gew.-% umfaßt.

## Claims

1. Method for the catalytic removal of a pollutant from the exhaust gas (6) of an internal combustion system (1), in particular a diesel engine, wherein the concentration of the pollutant in the exhaust gas (6) is calculated by means of a predetermined set of characteristics from operationally relevant parameters of the internal combustion system (1), wherein a predetermined amount of a reactant (10) is introduced into the exhaust gas (6) depending on the calculated concentration of the pollutant per unit time and is reacted with the pollutant on a catalyst (8), and wherein the set of characteristics is corrected having regard to a measurement value corresponding to the actual concentration of the pollutant, **characterised in that** operational states of the internal combustion system (1) with constant pollutant emission are determined, **in that**
a) during operation the measurement value of the actual pollutant concentration supplied by a sensor (15, 16) is continuously monitored,
b) an operational state of the internal combustion system (1) is recognised as an operational state with constant pollutant emission as long as the measurement value remains constant over a predeterminable time span,
and that only the concentration of the pollutant in the exhaust gas (6) that is determined during an operational state of the internal combustion system (1) with constant pollutant emission is taken into account for the correction of the set of characteristics.

2. Method according to claim 1, **characterised in that** an operational state of the internal combustion system (1) is determined as an operational state with substantially constant pollutant emission if the sensor measures a constant value over a time span that is longer than its response time.

3. Method according to one of claims 1 and 2, **characterised in that** for the correction of the set of characteristics the value for the concentration of the pollutant predetermined in the set of characteristics is compared with the value for the concentration of the pollutant that is determined by means of the sensor, and that in the case of a deviation that lies outside a predetermined tolerance range, the predetermined value is replaced by the determined value.

4. Method according to one of claims 1 to 3, **characterised in that** the concentration of the pollutant in the exhaust gas (6) is determined directly by means of a pollutant-sensitive sensor (15).

5. Method according to one of claims 1 to 4, **characterised in that** the concentration of the pollutant is determined by measuring, by means of a sensor (16) sensitive to a further component of the exhaust gas (6), the concentration of the further component, and that the concentration of the pollutant is determined from the concentration of the said further component.

6. Method according to one of claims 1 to 5, **characterised in that** ammonia or a substance releasing ammonia, in particular urea, is added as reactant (10) to the exhaust gas (6), and that nitrogen oxides are reacted as pollutant according to the method of selective catalytic reduction on a DeNOx catalyst.

7. Method according to claim 6, **characterised in that** the concentration of nitrogen oxides in the exhaust gas (6) is determined by measuring the concentration of hydrocarbons or carbon monoxide in the exhaust gas by means of a sensor (16), and a conclusion as to the concentration of nitrogen oxides is drawn from the concentration of hydrocarbons or carbon monoxide.

8. Device for the catalytic removal of a pollutant from the exhaust gas (6) of an internal combustion system (1), in particular a diesel engine, with an exhaust. gas channel (7), with an introduction device (9) for introducing a reactant (10) to the exhaust gas (6), with a catalyst (8) through which the exhaust gas (6) can flow for the reaction of the reactant (10) with the pollutant, and with a control unit (18) connected to the internal combustion system (1) and to the introduction device (9), wherein operationally relevant parameters of the internal combustion system (1) as well as a measurement value of the actual concentration of the pollutant determined by a sensor (15, 16) arranged in the exhaust gas channel (7) are available to the control unit (18), and wherein the control unit (18) is designed for calculating the concentration of the pollutant from the operationally relevant parameters with the aid of the predetermined set of characteristics, for the purposes of controlling the throughput of reactant in the introduction device (9) depending on the calculated concentration, and correcting the set of characteristics with the aid of the measurement value corresponding to the actual concentration of the pollutant, **characterised in that** the control unit (18) is designed so that it determines operational states of the internal combustion system (1) with constant pollutant emission, **in that**
a) during the operation it continuously monitors the measurement value supplied by the sensor (15, 16),
b) it recognises an operational state of the internal combustion system (1) as an operational state with constant pollutant emission as long as the measurement value remains constant over a predeterminable time span,
and that it takes into account only the concentration of the pollutant in the exhaust gas (6) determined during an operational state of the internal combustion system (1) with constant pollutant emission, for the correction of the set of characteristics.

9. Device according to claim 8, **characterised in that** the control unit (18) is designed to make a comparison of the value of the concentration of the pollutant predetermined in the set of characteristics with the value determined by means of the sensor during the operational state with substantially constant pollutant emission, and to correct the set of characteristics by replacing the predetermined value in the set of characteristics by the determined value in the case of a deviation that lies outside a predetermined tolerance range.

10. Device according to claim 8 or 9, **characterised in that** the sensor is a pollutant-sensitive sensor (15).

11. Device according to claim 8 or 9, **characterised in that** the sensor is a sensor (16) sensitive to a further exhaust gas component.

12. Device according to one of claims 8 to 11, **characterised in that** the catalyst (8) is designed as DeNOx catalyst in honeycomb or plate form for the removal of nitrogen oxides by means of a reducing agent, and comprises the materials titanium dioxide in an amount of 70 to 95 wt.%, tungsten trioxide and/or molybdenum trioxide in an amount of 5 to 20 wt.%, and vanadium pentoxide in an amount of less than 5 wt.%.

## Revendications

1. Procédé d'élimination catalytique d'une substance polluante des gaz (6) d'échappement d'un système (1) à combustion interne, notamment d'un moteur diesel, dans lequel on calcule au moyen d'un champ de courbes caractéristiques donné à l'avance, constitué de paramètres pertinents pour le fonctionnement du système (1) de combustion, la concentration de la substance polluante dans les gaz (6) d'échappement, dans lequel en fonction de la concentration calculée de la substance polluante, on introduit par unité de temps une quantité prescrite d'un agent (10) de réaction dans les gaz (6) d'échappement et on le fait réagir ensemble avec la substance polluante sur un catalyseur (8) et dans lequel on corrige le champ de courbes caractéristiques en tirant parti d'une valeur de mesure correspondant à la concentration réelle de la substance polluante,
**caractérisé en ce que**
on détermine des états de fonctionnement du système (1) de combustion à émission constante de substance polluante en
a) suivant en continu pendant le fonctionnement la valeur de mesure de la concentration réelle de substance polluante fournie par un capteur (15, 16),
b) en reconnaissant un état de fonctionnement du système (1) de combustion comme un état de fonctionnement à émission constante de substance polluante dès que la valeur de mesure reste constante sur un laps de temps qui peut être prescrit,
et **en ce que** l'on tire parti pour la correction du champ de courbes caractéristiques seulement de la concentration de la substance polluante dans les gaz (6) d'échappement déterminée pendant un état de fonctionnement du système (1) de combustion à émission constante de la substance polluante.

2. Procédé suivant la revendication 1, **caractérisé en ce que** l'on détermine un état de fonctionnement du système (1) de combustion comme un état de fonctionnement à émission sensiblement constante de la substance polluante lorsque le capteur mesure une valeur constante pendant un laps de temps qui est plus grand que son temps de réponse.

3. Procédé suivant la revendication 1 à 2, **caractérisé en ce que** pour la correction du champ de courbes caractéristiques, on compare la valeur prescrite dans le champ de courbes caractéristiques pour la concentration de la substance polluante à la valeur déterminée au moyen du capteur de la concentration de la substance polluante et **en ce que**, en cas d'écart qui se trouve à l'extérieur d'une plage de tolérances prescrite, on remplace la valeur prescrite par la valeur déterminée.

4. Procédé suivant l'une des revendications 1 à 3, **caractérisé en ce que** l'on détermine la concentration de la substance polluante dans les gaz (6) d'échappement directement au moyen d'un capteur (15) sensible à la substance polluante.

5. Procédé suivant l'une des revendications 1 à 4, **caractérisé en ce que** l'on détermine la concentration de la substance polluante en mesurant au moyen d'un capteur (16) sensible à un autre constituant des gaz (6) d'échappement la concentration de l'autre constituant et **en ce que** l'on détermine la concentration de la substance polluante à partir l'autre constituant.

6. Procédé suivant l'une des revendications 1 à 5, **caractérisé en ce que** l'on ajoute comme agent (10) de réaction aux gaz (6) d'échappement de l'ammoniac ou une substance dégageant de l'ammoniac, notamment de l'urée, et **en ce que** l'on fait réagir comme substance polluante des oxydes d'azote suivant le procédé de la réduction catalytique sélective sur un pot catalytique DeNOx.

7. Procédé suivant la revendication 6, **caractérisé en ce que** l'on détermine la concentration des oxydes d'azote dans les gaz (6) d'échappement en mesurant au moyen d'un capteur (16) dans les gaz d'échappement la concentration des hydrocarbures ou du monoxyde de carbone et en déduisant de la concentration en hydrocarbures ou en monoxyde de carbone la concentration des oxydes d'azote.

8. Dispositif d'élimination catalytique d'une substance polluante des gaz (6) d'échappement d'un système (1) à combustion interne, notamment d'un moteur diesel, comprenant un canal (7) pour les gaz d'échappement, un dispositif (9) d'introduction d'un agent (10) de réaction dans les gaz (6) d'échappement, un pot catalytique (8), dans lequel peuvent passer les gaz (6) d'échappement et destiné à faire réagir l'agent (10) de réaction sur la substance polluante et une unité (18) de contrôle reliée au système (1) de combustion et au dispositif (9) d'introduction, des paramètres pertinents pour le fonctionnement du système (1) de combustion ainsi qu'une valeur de mesure, déterminée par un capteur (15, 16) monté dans le canal (7) pour les gaz d'échappement, de la concentration réelle de la substance polluante pouvant être mise à disposition de l'unité (18) de contrôle et l'unité (18) de contrôle étant conçue pour le calcul de la concentration de la substance polluante à partir des paramètres pertinents pour le fonctionnement au moyen du champ de courbes caractéristiques prescrit pour une commande du débit de l'agent de réaction dans le dispositif (9) d'introduction en fonction de la concentration calculée et pour une correction du champ de courbes caractéristiques au moyen de la valeur de mesure correspondant à la concentration réelle de la substance polluante,
**caractérisé en ce que** l'unité (18) de contrôle est constituée de manière à déterminer des états de fonctionnement du système (1) de combustion à émission constante de la substance polluante, par le fait que
a) elle suit en continu pendant le fonctionnement la valeur de mesure fournie par le capteur (15, 16),
b) elle reconnaît un état de fonctionnement du système (1) de combustion comme un état de fonctionnement à émission constante de substance polluante dès que la valeur de mesure reste constante sur un laps de temps qui peut être prescrit,
et **en ce qu'**elle ne tire parti pour la correction du champ de courbes caractéristiques que de la concentration de la substance polluante dans les gaz (6) d'échappement déterminée pendant un état de fonctionnement du système (1) de combustion à émission constante de substance polluante.

9. Dispositif suivant la revendication 8, **caractérisé en ce que** l'unité (18) de contrôle est conçue pour une comparaison de la valeur prescrite dans le champ de courbes caractéristiques de la concentration de la substance polluante à la valeur déterminée au moyen du capteur pendant l'état de fonctionnement à émission sensiblement constante de la substance polluante et pour la correction du champ de courbes caractéristiques par remplacement de la valeur prescrite dans le champ de courbes caractéristiques par la valeur déterminée s'il se produit un écart qui est en dehors d'une plage de tolérances prescrite.

10. Dispositif suivant la revendication 8 ou 9, **caractérisé en ce que** le capteur est un capteur (15) sensible à la substance polluante.

11. Dispositif suivant la revendication 8 ou 9, **caractérisé en ce que** le capteur est un capteur (16) sensible à un autre constituant des gaz d'échappement.

12. Dispositif suivant l'une des revendications 8 à 11, **caractérisé en ce que** le pot (8) catalytique est constitué en pot catalytique DeNOx sous la forme en nid d'abeille ou en plaques d'élimination d'oxyde d'azote au moyen d'un agent réducteur et les matériaux comprennent du dioxyde de titane pour 70 à 95 % en poids, du trioxyde de tungstène et/ou du trioxyde de molybdène pour 5 à 20 % en pois et du pentoxyde de vanadium pour moins de 5 % en poids.
